# EUROPEAN PATENT APPLICATION

(11) **EP 2 816 829 A2**
(43) Date of publication of application: **24.12.2014**
(21) Application number: 12742335.8
(22) Date of filing: 14.03.2012
(51) Int. Cl.: H04W 8/00

(54) **METHOD AND APPARATUS FOR HANDLING VOICE CALLS**

(71) Applicant: Huawei Technologies Co., Ltd., Shenzhen, Guangdong 518129 (CN)
(72) Inventor: WANG, Xinyong, Shenzhen Guangdong 518129 (CN); ZHU, Haopeng, Shenzhen Guangdong 518129 (CN)
(74) Representative: Haley, Stephen
(86) International application number: PCT/CN2012/072321
(87) International publication number: WO 2012/103825

(57) **Abstract**

The present invention relates to the field of communications technologies, and in particular, to a method and an apparatus for processing a voice call. In the method for processing a voice call provided in an embodiment of the present invention, when determining that a visited network to which a UE belongs and a home network to which the UE belongs are not a same communication network, a CSFB Proxy of the visited network to which the UE belongs sends a first initial address message to a GMSC of the home network to which the UE belongs, so that the GMSC may send a first send routing information request to an HLR of the home network to which the UE belongs. By using the method provided in the embodiment of the present invention, when the visited network to which the UE belongs and the home network to which the UE belongs are not the same communication network, the CSFB Proxy can send the first send routing information request to the HLR through the GMSC, thereby ensuring normal connection of a voice call.

## Description

### FIELD OF THE INVENTION

The present invention relates to the field of communications technologies, and in particular, to a method and an apparatus for processing a voice call.

### BACKGROUND OF THE INVENTION

In a process of evolving from 3G (Third Generation, third generation mobile communication) to LTE (Long Term Evolution, long term evolution), when an LTE network is deployed, in order to protect an investment in a 2G (Second Generation, second generation mobile communication)/3G circuit switched domain, a voice service is still provided by a core network of the 2G/3G circuit switched domain. Because a UE (User Equipment, user equipment) is a dual-mode terminal that adopts a Single-radio mode, when receiving or sending packet data in the case in which the UE accesses the LTE, the UE cannot receive or send voice data of a GSM (Global System for Mobile communication, global system for mobile communication)/WCDMA (Wideband Code Division Multiple Access, wideband code division multiple access mobile communication system) circuit switched domain simultaneously.

In order that the UE can receive or send voice data of a circuit switched domain simultaneously in the LTE, and can perform correct processing on an ongoing packet domain service in the case in which the UE accesses the LTE, a CSFB (Circuit Switched Fallback, circuit switched fallback) Proxy (proxy) may be used to enable the UE to fall back to the 2G/3G circuit switched domain.

Specifically, in a process where the UE roams and a voice call is initiated to the UE, a GMSC (Gateway Mobile Switching Center, gateway mobile switching center) sends an SRI (Send Routing Information, send routing information) request to an HLR (Home Location Register, home location register), and after receiving the SRI request, the HLR sends a PRN (Provide Roaming Number, provide roaming number) request to the CSFB Proxy, so that the CSFB Proxy sends a paging (Paging) request to the UE to trigger the UE, to fall back to the circuit switched domain, so as to establish the voice call.

However, when the UE roams and a voice call is initiated to the UE, if a visited network to which the UE belongs and a home network to which the UE belongs are not the same communication network, for example, the visited network to which the UE belongs is a network deployed by China Mobile, and the home network to which the UE belongs is a network deployed by China Unicom, a GSMC of the visited network to which the UE belongs cannot send an SRI request to an HLR of the home network to which the UE belongs, thereby causing that the call fails.

### SUMMARY OF THE INVENTION

An objective of embodiments of the present invention is to provide a method and an apparatus for processing a voice call, so that when a visited network to which a UE belongs and a home network to which the UE belongs are not the same communication network, a communication connection can be established between a CSFB Proxy of the visited network to which the UE belongs and an HLR of the home network to which the UE belongs, thereby ensuring normal connection of a voice call.

In one aspect, an embodiment of the present invention provides a method for processing a voice call, and the method includes:
when a voice call is initiated to a user equipment, determining, by a circuit switched fallback proxy entity of a visited network to which the user equipment belongs, whether the visited network to which the user equipment belongs and a home network to which the user equipment belongs are a same communication network; and
if the visited network to which the user equipment belongs and the home network to which the user equipment belongs are not the same communication network, sending, by the circuit switched fallback proxy entity, a first initial address message to a gateway mobile switching center of the home network to which the user equipment belongs, so that the gateway mobile switching center sends a first send routing information request to a home location register of the home network to which the user equipment belongs.

In another aspect, an embodiment of the present invention provides a circuit switched fallback proxy entity apparatus, which includes:
a determining unit, configured to determine whether a visited network to which a user equipment belongs and a home network to which the user equipment belongs are a same communication network when a voice call is initiated to the user equipment; and
a sending unit, configured to send a first initial address message to a gateway mobile switching center of the home network to which the user equipment belongs when the determining unit determines that the visited network to which the user equipment belongs and the home network to which the user equipment belongs are not the same communication network, so that the gateway mobile switching center sends a first send routing information request to a home location register of the home network to which the user equipment belongs.

With the method and the apparatus for processing a voice call provided in the embodiments of the present invention, when a visited network to which a UE belongs and a home network to which the UE belongs are not the same communication network, a CSFB Proxy of the visited network to which the UE belongs can send, through a GMSC of the home network to which the UE belongs, a first SRI request to an HLR of the home network to which the UE belongs, thereby ensuring normal connection of a voice call.

### BRIEF DESCRIPTION OF THE DRAWINGS

FIG. 1 is a schematic diagram of a method for processing a voice call according to an embodiment of the present invention;
FIG. 2A and FIG. 2B are a schematic diagram of another method for processing a voice call according to an embodiment of the present invention;
FIG. 3 is a schematic diagram of a circuit switched fallback proxy entity apparatus according to an embodiment of the present invention; and
FIG. 4 is a schematic diagram of another circuit switched fallback proxy entity apparatus according to an embodiment of the present invention.

### DETAILED DESCRIPTION OF THE EMBODIMENTS

The technical solutions in the embodiment of the present invention are described clearly and completely in the following with reference to the accompanying drawings in the embodiment of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

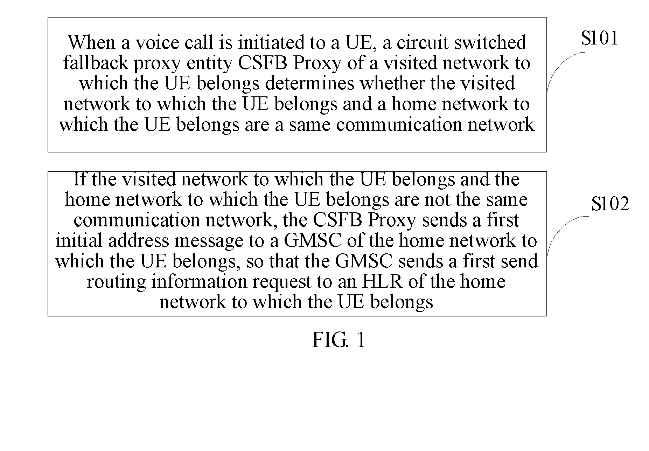

FIG. 1 is a schematic diagram of a method for processing a voice call according to an embodiment of the present, and the method includes:
S101: When a voice call is initiated to a UE, a circuit switched fallback proxy entity (CSFB Proxy) of a visited network to which the UE belongs determines whether the visited network to which the UE belongs and a home network to which the UE belongs are a same communication network.

It should be noted that a manner in which the CSFB Proxy determines whether the visited network to which the UE belongs and the home network to which the UE belongs are the same communication network may include:
determining, by the CSFB Proxy, whether the visited network to which the UE belongs and the home network to which the UE belongs are the same communication network according to a first international mobile subscriber identification number (International Mobile Subscriber Identification Number, IMSI for short) of the UE.

A manner in which the CSFB Proxy acquires the first IMSI of the UE before the determination is not limited in this embodiment of the present invention. For demonstration but not for limitation, the CSFB Proxy may acquire the first IMSI for the determination in the following manners:

The CSFB Proxy receives the first IMSI of the UE, where the first IMSI of the UE is sent by an HLR of the home network to which the UE belongs.

Optionally, the CSFB Proxy may receive the first IMSI that is sent by the HLR through a cancel location (Cancel Location) request.

Optionally, before the CSFB Proxy receives the first IMSI that is sent by the HLR through the cancel location request, the CSFB Proxy may receive a first provide roaming number (PRN) request sent by the HLR, where the first provide roaming number request carries a second international mobile subscriber identification number (IMSI) of the user equipment; the CSFB Proxy determines, according to the second international mobile subscriber identification number, whether the visited network to which the UE belongs and the home network to which the UE belongs are the same communication network; and if the visited network to which the UE belongs and the home network to which the UE belongs are not the same communication network, the CSFB Proxy sends a first provide roaming number response (PRN Response) to the HLR, where the first provide roaming number response carries a first mobile service roaming number (Mobile Service Roaming Number, MSRN for short), so that the HLR sends the first mobile service roaming number to a GMSC of the home network to which the UE belongs.

An international mobile subscriber identification number includes an MNC (Mobile Network Code, mobile network code) used to identify a home network to which a user equipment belongs. After receiving the second IMSI of the UE, the CSFB Proxy determines whether a communication network that is indicated by an MNC in the second IMSI is the same as a communication network where the CSFB Proxy is located, and if they are not the same, the CSFB Proxy determines that the visited network to which the UE belongs and the home network to which the UE belongs are not the same communication network; otherwise, the CSFB Proxy determines that the visited network to which the UE belongs and the home network to which the UE belongs are the same communication network.

Optionally, after the HLR sends the first mobile service roaming number to the GMSC, the CSFB Proxy receives a second initial address message (Initial Address Message, IAM for short) that is sent by the GMSC according to the first mobile service roaming number, so that the GMSC connects the voice call to the CSFB Proxy.

When the UE roams, a communication network to which a visited place of the UE belongs is called as a visited network to which the UE belongs, a communication network to which a home place of the UE belongs is called as a home network to which the UE belongs. For example, the UE is a China Mobile subscriber, and roams to a communication network deployed by China Unicom, so that the home network to which the UE belongs is a communication network deployed by China Mobile and the visited network to which the UE belongs is the communication network deployed by China Unicom. "Whether the visited network to which the UE belongs and the home network to which the UE belongs are the same communication network" in this embodiment of the present invention specifically refers to "whether the visited network to which the UE belongs and the home network to which the UE belongs are communication networks deployed by a same mobile communication operator".

S102: If the visited network to which the UE belongs and the home network to which the UE belongs are not the same communication network, the CSFB Proxy sends a first initial address message (IAM) to a GMSC of the home network to which the UE belongs, so that the GMSC sends a first send routing information (SRI) request to an HLR of the home network to which the UE belongs.

The CSFB Proxy may send, to the GMSC, a first initial address message that carries a called number of the UE, so that the GMSC may send the first SRI request to the HLR according to the called number of the UE.

Optionally, after the GMSC sends the first SRI request to the HLR, the HLR sends a second provide roaming number (PRN) request to a visited mobile switching center (Visited Mobile Switching Center, VMSC for short) of the visited network to which the UE belongs. The HLR receives a second provide roaming number response sent by the VMSC, where the second provide roaming number response carries a second MSRN; and the HLR sends a first send routing information ack (Send Routing Information Ack, SRI Ack for short) to the GMSC, where the first send routing information ack carries the second MSRN, so that the GMSC sends a third initial address message (IAM) to the VMSC according to the second MSRN, so as to connect the voice call to the VMSC.

With the method for processing a voice call provided in this embodiment of the present invention, when a visited network to which a UE belongs and a home network to which the UE belongs are not the same communication network, a CSFB Proxy of the visited network to which the UE belongs can send, through a GMSC of the home network to which the UE belongs, a first SRI request to an HLR of the home network to which the UE belongs, thereby ensuring normal connection of a voice call. Secondly, because an IMSI includes information used to identify a home network to which a user equipment belongs, the CSFB Proxy may effectively determine, according to an IMSI of the UE, whether the visited network to which the UE belongs and the home network to which the UE belongs are the same communication network. In addition, when the CSFB Proxy receives a first PRN request and determines, according to a second IMSI carried in the first PRN request, that the visited network to which the UE belongs and the home network to which the UE belongs are not the same communication network, the CSFB Proxy sends a first MSRN to the GMSC, so that the GMSC sends a second initial address message to the CSFB Proxy according to the first MSRN, thereby connecting the voice call to the visited network to which the UE belongs. Thirdly, when the CSFB Proxy receives a cancel location request and determines, according to a first IMSI carried in the cancel location request, that the visited network to which the UE belongs and the home network to which the UE belongs are not the same communication network, the CSFB Proxy sends a first initial address message to the GMSC, to reconnect the voice call to the home network to which the UE belongs, so that first send routing information can be sent to the HLR through the GMSC, thereby ensuring normal connection of a voice call between different communication networks.

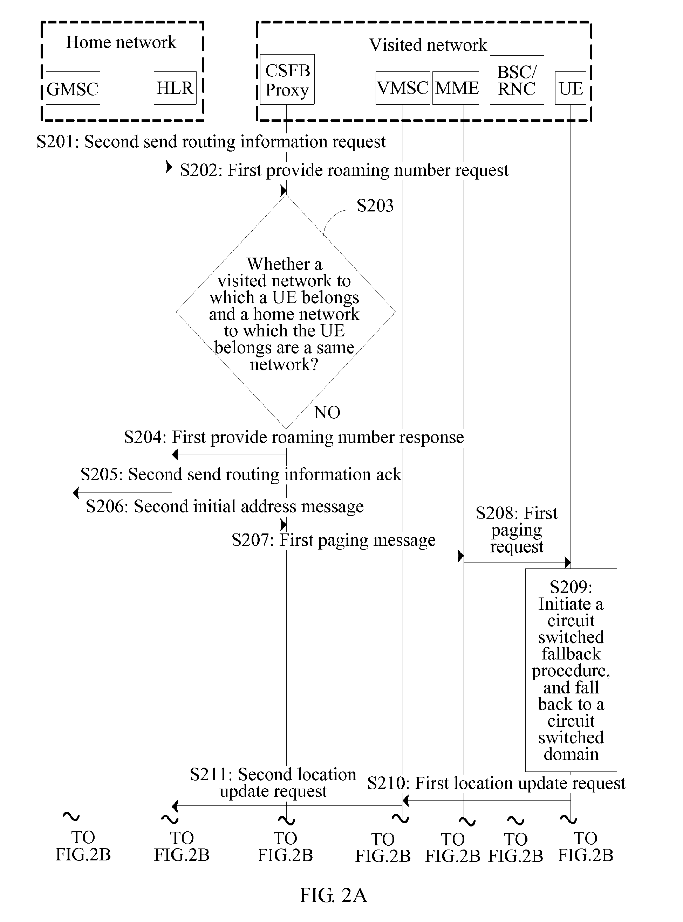

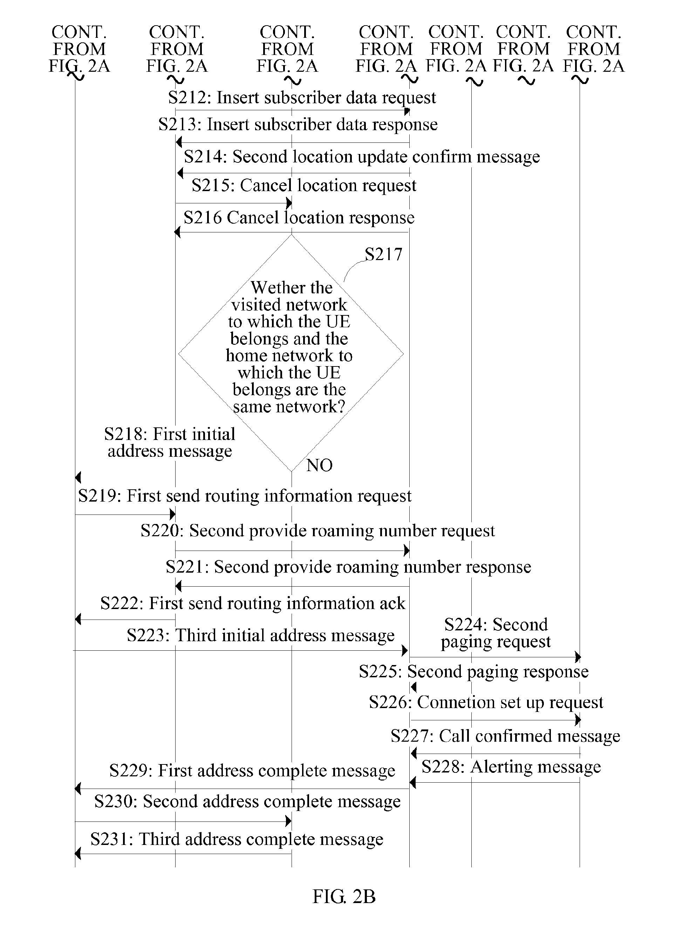

FIG. 2A and FIG. 2B are a chematic diagram of another method for processing a voice call according to an embodiment of the present invention, and the method includes:
S201: When a voice call is initiated to a UE, a GMSC of a home network to which the UE belongs sends a second send routing information (SRI) request to an HLR of the home network to which the UE belongs.
S202: The HLR sends a first provide roaming number (PRN) request to a CSFB Proxy of a visited network to which the UE belongs, where the first provide number request carries a second international mobile subscriber identification number (IMSI) of the UE.
S203: The CSFB Proxy determines, according to the second international mobile subscriber identification number, whether the visited network to which the UE belongs and the home network to which the UE belongs are the same communication network. If the visited network to which the UE belongs and the home network to which the UE belongs are not the same communication network, execute step S204; otherwise, execute step S207;

It should be noted that an international mobile subscriber identification number includes information used to identify a home network to which a user equipment belongs, and the CSFB Proxy may determine, according to the second IMSI of the UE, whether the visited network to which the UE belongs and the home network to which the UE belongs are the same communication network.

Specifically, an IMSI is formed by an MCC (Mobile Country Code, mobile country code), an MNC (Mobile Network Code, mobile network code), and an MSIN (Mobile Subscriber Identification Number, mobile subscriber identification number), where the MNC may be used to identify a home network to which a user equipment belongs. For example, an MCC of China is 460, an MNC of a China Mobile GSM communication network is 00 or 02, an MNC of a China Unicom GSM communication network is 01, an MNC of a China Telecom CDMA communication network is 03, and an MNC of a China Mobile TD-SCDMA communication network is 07. If a country has multiple mobile network operators, user equipments of different communication networks in one country may be distinguished through MNCs.

For example, if an MNC in the second IMSI is 03, a network where the CSFB Proxy is located is a communication network of China Mobile, the CSFB Proxy determines that a communication network (that is the home network to which the UE belongs, which is a CDMA communication network of China Telecom herein) that is indicated by the MNC in the second IMSI and a communication network (that is the visited network to which the UE belongs, which is the communication network of China Mobile herein) where the CSFB Proxy is located are not the same communication network, that is, the home network to which the UE belongs and the visited network to which the UE belongs are not the same communication network.

It should be noted that when the first PRN request is received, whether the voice call needs to be connected to the CSFB Proxy from the GMSC needs to be determined according to the second IMSI carried in the first PRN. Specifically, if it is determined, according to the second IMSI, that the visited network to which the UE belongs and the home network to which the UE belongs are not the same communication network, the voice call needs to be connected to the CSFB Proxy from the GMSC; otherwise, the voice call does not need to be connected to the CSFB Proxy, and step S207 may be executed.

It should be noted that this step S203 is triggered when the first PRN request is received.
S204: The CSFB Proxy sends a first provide roaming number response (Provide Roaming Number Response, PRN Response for short) to the HLR, where the first provide roaming number response carries a first mobile service roaming number (MSRN).

A manner in which the CSFB Proxy acquires the first MSRN is not limited in this embodiment of the present invention. For demonstration but not for limitation, when determining that the visited network to which the UE belongs and the home network to which the UE belongs are not the same communication network, the CSFB Proxy may allocate the first MSRN, or may acquire the first MSRN from another network entity.
S205: The HLR sends a second send routing information ack (SRI Ack) to the GMSC, where the second send routing information ack carries the first MSRN.
S206: The GMSC sends a second initial address message (IAM) to the CSFB Proxy according to the first MSRN.

It should be noted that: after the GMSC sends the second initial address message to the CSFB Proxy, the voice call is connected to the CSFB Proxy.
S207: The CSFB Proxy sends, through an SGs interface, a first paging (Paging) request to an MME (Mobility Management Entity, mobility management entity) of the visited network to which the UE belongs.
S208: The MME sends the first paging request to the UE.
S209: The UE initiates a circuit switched fallback procedure, falls back to a circuit switched domain, and step S210 is executed after the UE falls back to the circuit switched domain.
S210: The UE sends a first location update (Location Update) request to a VMSC of the visited network to which the UE belongs.
S211: The VMSC sends a second location update (MAP Location Update) request to the HLR.
S212: The HLR sends an insert subscriber data (Insert Sub data) request to the VMSC.
S213: The VMSC sends an insert subscriber data response to the HLR.
S214: The HLR sends a second location update confirm (MAP Location Update Confirm) message to the VMSC.
S215: The HLR sends a cancel location (Cancel Location) request to the CSFB Proxy, where the cancel location request carries a first international mobile subscriber identification number (IMSI).
S216: The CSFB Proxy sends a cancel location response (Cancel Location Response) to the HLR.
S217: The CSFB Proxy determines, according to the first international mobile subscriber identification number, whether the visited network to which the UE belongs and the home network to which the UE belongs are the same communication network. If the visited network to which the UE belongs and the home network to which the UE belongs are not the same communication network, execute step S218. If the visited network to which the UE belongs and the home network to which the UE belongs are the same communication network, the CSFB Proxy directly sends a third send routing information (SRI) request to the HLR. After receiving the third SRI request, the HLR sends a third provide roaming number (PRN) request to the VMSC, receives a third provide roaming number response (PRN Response) that carries a third mobile service roaming number (MSRN) and is sent by the VMSC, and sends a third send routing information ack (SRI Ack) to the CSFB Proxy. The CSFB Proxy sends, to the HLR, a first provide roaming number response that carries the third MSRN, the HLR sends, to the GMSC, a second send routing information response that carries the third MSRN, and the GMSC sends a fourth initial address message (IAM) to the VMSC according to the third MSRN.

It should be noted that when the cancel location request is received, whether the voice call needs to be reconnected to the GMSC needs to be determined according to the first IMSI carried in the cancel location request. Specifically, if the CSFB Proxy determines, according to the first IMSI, that the visited network to which the UE belongs and the home network to which the UE belongs are not the same communication network, the voice call needs to be reconnected to the GMSC; otherwise, because the voice call is not connected to the CSFB Proxy before, the voice call does not need to be connected to the GMSC, and the third SRI request may be directly sent to the HLR.

A manner in which the CSFB Proxy determines, according to the first IMSI, whether the visited network to which the UE belongs and the home network to which the UE belongs are the same communication network may include:
determining, by the CSFB Proxy, whether a communication network that is indicated by an MNC in the first IMSI and a communication network where the CSFB Proxy is located are the same; if they are the same, determining that the visited network to which the UE belongs and the home network to which the UE belongs are the same communication network; otherwise, determining that the visited network to which the UE belongs and the home network to which the UE belongs are not the same communication network. Reference may be made to step S203 for details and is not described herein again.

Step S217 is triggered when the cancel location request is received.
Step S217 may be executed before, after or at the time when step S216 is executed, and a sequence between step S217 and step S216 is not limited in this embodiment of the present invention.
S218: The CSFB Proxy sends a first initial address message (IAM) to the GMSC, where the first initial address message carries a called number of the UE.

It should be noted that, the CSFB Proxy may use an MSISDN (Mobile Station international ISND number, mobile station international ISDN number) of the UE as the called number of the UE.

It should be noted that after the first initial address message is sent to the GMSC, the CSFB Proxy reconnects the voice call to the GMSC.
S219: The GMSC sends a first send routing information (SRI) request to the HLR.
S220: The HLR sends a second provide roaming number (PRN) request to the VMSC.
S221: The VMSC allocates a second mobile service roaming number (MSRN).

The VMSC sends a second provide roaming number response (PRN Response) to the HLR, where the second provide roaming number response carries the second mobile service roaming number.
S222: The HLR sends a first send routing information ack (SRI Ack) to the GMSC, where the first send routing information ack carries the second mobile service roaming number.
S223: The GMSC sends a third initial address message (IAM) to the VMSC according to the second mobile service roaming number.

It should be noted that after the GMSC sends the third initial address message to the VMSC, the GMSC connects the voice call to the VMSC.
S224: The VMSC sends a second paging (Paging) request to the UE.
S225: The UE sends a second paging response to the VMSC.
S226: The VMSC sends a connection set up (Set Up) request to the UE.
S227: The UE sends a call confirmed (Call Confirmed) message to the VMSC.
S228: After alerting, the UE sends an alerting (Alerting) message to the VMSC.
S229: The VMSC sends a first address complete message (Address Complete Message, ACM for short) to the GMSC.
S230: The GMSC sends a second address complete message (ACM) to the CSFB Proxy.
S231: The CSFB Proxy sends a third address complete message (ACM) to the GMSC.

With another method for processing a voice call provided in this embodiment of the present invention, when a visited network to which a UE belongs and a home network to which the UE belongs are not the same communication network, a CSFB Proxy of the visited network to which the UE belongs can send, through a GMSC of the home network to which the UE belongs, a first SRI request to an HLR of the home network to which the UE belongs, thereby ensuring normal connection of a voice call. Secondly, because an IMSI includes information used to identify a home network to which a user equipment belongs, the CSFB Proxy may effectively determine, according to an IMSI of the UE, whether the visited network to which the UE belongs and the home network to which the UE belongs are the same communication network. In addition, when the CSFB Proxy receives a first PRN request and determines, according to a second IMSI carried in the first PRN request, that the visited network to which the UE belongs and the home network to which the UE belongs are not the same communication network, the CSFB Proxy sends a first MSRN to the GMSC, so that the GMSC sends, according to the first MSRN, a second initial address message to the CSFB Proxy, thereby connecting the voice call to the visited network to which the UE belongs. Thirdly, when the CSFB Proxy receives a cancel location request and determines, according to a first IMSI carried in the cancel location request, that the visited network to which the UE belongs and the home network to which the UE belongs are not the same communication network, the CSFB Proxy sends a first initial address message to the GMSC, to reconnect the voice call to the home network to which the UE belongs, so that first send routing information can be sent to the HLR through the GMSC, thereby ensuring normal connection of a voice call between different communication networks.

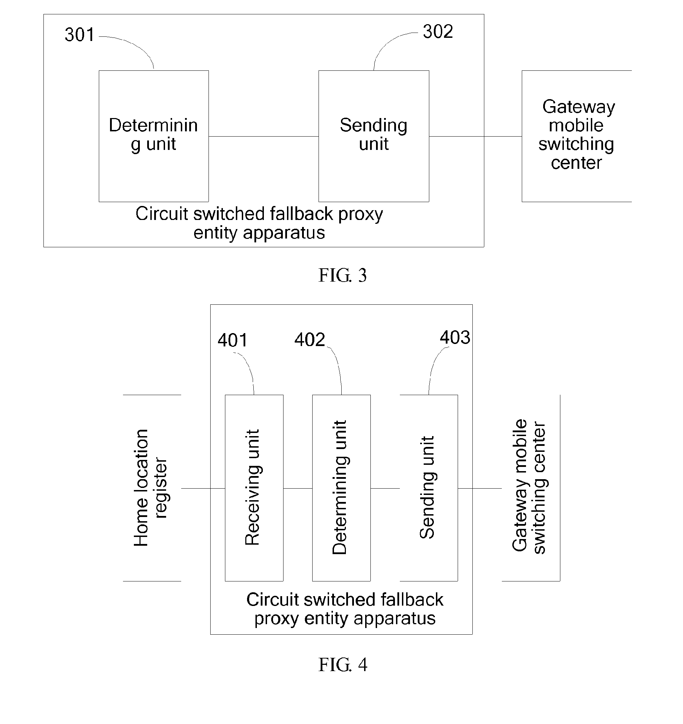

FIG. 3 is a schematic diagram of a circuit switched fallback proxy entity apparatus according to an embodiment of the present invention, and the circuit switched fallback proxy entity apparatus includes:
a determining unit 301, configured to determine whether a visited network to which a UE belongs and a home network to which the UE belongs are a same communication network when a voice call is initiated to the UE; and
a sending unit 302, configured to send a first initial address message to a GMSC of the home network to which the UE belongs when the determining unit 301 determines that the visited network to which the UE belongs and the home network to which the UE belongs are not the same communication network" so that the GMSC sends a first send routing information request to an HLR of the home network to which the UE belongs.

It should be noted that the determining unit 301 may be specifically configured to determine, according to a first international mobile subscriber identification number of the UE, whether the visited network to which the UE belongs and the home network to which the UE belongs are the same communication network.

It should be noted that the sending unit 302 may be specifically configured to send a first initial address message that includes a called number of the UE to the GMSC when the determining unit 301 determines that the visited network to which the UE belongs and the home network to which the user equipment belongs are not the same communication network, so that the GMSC sends the first send routing information request to the HLR according to the called number of the UE.

With the circuit switched fallback proxy entity apparatus provided in this embodiment of the present invention, when a determining unit determines that a visited network to which a UE belongs and a home network to which the UE belongs are not the same communication network, a sending unit may send, through a GMSC of the home network to which the UE belongs, a first SRI request to an HLR of the home network to which the UE belongs, thereby ensuring normal connection of a voice call. Secondly, because an international mobile subscriber identification number includes information used to identify a home network to which a user equipment belongs, the determining unit may effectively determine, according to an international mobile subscriber identification number of the UE, whether the visited network to which the UE belongs and the home network to which the UE belongs are the same communication network.

FIG. 4 is a schematic diagram of another circuit switched fallback proxy entity apparatus according to an embodiment of the present invention, and the circuit switched fallback proxy entity apparatus includes:
a receiving unit 401, configured to receive a first IMSI of a UE when a voice call is initiated to the UE, where the first IMSI of the UE is sent by an HLR of a home network to which the UE belongs;
a determining unit 402, configured to determine, according to the first IMSI received by the receiving unit 401, whether a visited network to which the UE belongs and the home network to which the UE belongs are a same communication network; and
a sending unit 403, configured to send a first initial address message to a GMSC of the home network to which the UE belongs when the determining unit 402 determines that the visited network to which the UE belongs and the home network to which the UE belongs are not the same communication network, so that the GMSC sends a first send routing information request to the HLR of the home network to which the UE belongs.

It should be noted that the receiving unit 401 may be specifically configured to receive the first IMSI that is sent by the HLR through a cancel location (Cancel Location) request.

The receiving unit 401 may further be configured to receive a first provide roaming number request sent by the HLR, where the first provide roaming number request carries a second IMSI of the UE.

The determining unit 402 may further be configured to determine, according to the second IMSI received by the receiving unit 401, whether the visited network to which the UE belongs and the home network to which the UE belongs are the same communication network.

When the determining unit 402 determines, according to the second IMSI, that the visited network to which the UE belongs and the home network to which the UE belongs are not the same communication network, the sending unit 403 may further be configured to send a first provide roaming number response to the HLR, where the first provide roaming number response carries a first mobile service roaming number, so that the HLR sends the first mobile service roaming number to the GMSC.

It should be noted that the receiving unit 401 may further be configured to receive a second initial address message that is sent by the GMSC according to the first mobile service roaming number, so that the GMSC connects the voice call to the circuit switched fallback proxy entity apparatus.

Optionally, the apparatus may further include:
an allocating unit, configured to allocate the first mobile service roaming number.

Optionally, the sending unit 403 may be specifically configured to send a first initial address message that includes a called number of the UE to the GMSC when the determining unit 402 determines that the visited network to which the UE belongs and the home network to which the user equipment belongs are not the same communication network, so that the GMSC sends the first send routing information request to the HLR according to the called number of the UE.

In the embodiments of the present invention, to facilitate understanding, terms "the first international mobile subscriber identification number" and "the second international mobile subscriber identification number" adopt different names, may be the same international mobile subscriber identification number and may also be different international mobile subscriber identification numbers, which is not limited in the present invention.

To facilitate understanding, terms "the first send routing information request", "the second send routing information request", and "the third send routing information request" adopt different names, may be the same send routing information request, and may also be different send routing information requests, which is not limited in the present invention.

For convenience of understanding, terms "first provide roaming number request", "second provide roaming number request", and "third provide roaming number request" adopt different names, may be the same roaming number request, and may also be different roaming number requests, which is not limited by the present invention.

To facilitate understanding, terms "the first address complete message", "the second address complete message", and "the third address complete message" adopt different names, may be the same address complete message, and may also be different address complete messages, which is not limited in the present invention.

With the method and apparatus for processing a voice call provided in the embodiments of the present invention, when a visited network to which a UE belongs and a home network to which the UE belongs are not the same communication network, a CSFB Proxy of the visited network to which the UE belongs can send, through a GMSC of the home network to which the UE belongs, a first SRI request to an HLR of the home network to which the UE belongs, thereby ensuring normal connection of a voice call. Secondly, because an IMSI includes information used to identify a home network to which a user equipment belongs, so that the CSFB Proxy may effectively determine, according to an IMSI of the UE, whether the visited network to which the UE belongs and the home network to which the UE belongs are the same communication network. In addition, when the CSFB Proxy receives a first PRN request and determines, according to a second IMSI carried in the first PRN request, that the visited network to which the UE belongs and the home network to which the UE belongs are not the same communication network, the CSFB Proxy sends a first MSRN to the GMSC, so that the GMSC sends, according to the first MSRN, a second initial address message to the CSFB Proxy, thereby connecting the voice call to the visited network to which the UE belongs. Thirdly, when the CSFB Proxy receives a cancel location request and determines, according to a first IMSI carried in the cancel location request, that the visited network to which the UE belongs and the home network to which the UE belongs are not the same communication network, the CSFB Proxy sends a first initial address message to the GMSC, to reconnect the voice call to the home network to which the UE belongs, so that first send routing information can be sent to the HLR, thereby ensuring normal connection of a voice call between different communication networks.

Through the description of the foregoing embodiments, persons skilled in the art may clearly understand that all or part of steps in the methods according to the foregoing embodiments may be implemented by using a manner of software plus a necessary general hardware platform. Based on such an understanding, the technical solutions in the present invention essentially, or the part contributing to the prior art may be implemented in the form of a software product. The computer software product is stored in a storage medium, such as a ROM/RAM, a magnetic disk, or an optical disk, and includes several instructions for instructing a computer device (which may be a personal computer, a server, a network device, or the like) to perform steps of the methods described in all or a certain part of the embodiments of the present invention.

It should be noted that each embodiment in this specification is described in a progressive manner. For the same or similar parts in the embodiments, references may be made to each other. Each embodiment mainly puts an emphasis on a difference from other embodiments. In particular, for the apparatus embodiments, because they are basically similar to the method embodiments, the apparatus embodiments are described simply, and for an execution process of specific functions for all units, reference may be made to the part of the description of the method embodiments. The apparatus embodiments described in the foregoing are only exemplary. The units that are described as separate components may be physically separated or may be not physically separated, and the components displayed as units may be physical units or may be not physical units. That is, the units or components may be located at one place or distributed on multiple network units. A part of or all of the modules may be selected according to an actual need to achieve the objectives of the solutions of the embodiments. Persons of ordinary skill in the art may understand and implement the embodiments without creative efforts.

In conclusion, the foregoing descriptions are merely exemplary embodiments of the present invention, but are not intended to limit the protection scope of the present invention. Any modification, equivalent replacement, or improvement made within the spirit and principle of the present invention shall all fall within the protection scope of the present invention.

## Claims

1. A method for processing a voice call, comprising:
when a voice call is initiated to a user equipment, determining, by a circuit switched fallback proxy entity of a visited network to which the user equipment belongs, whether the visited network to which the user equipment belongs and a home network to which the user equipment belongs are a same communication network; and
if the visited network to which the user equipment belongs and a home network to which the user equipment belongs are not the same communication network, sending, by the circuit switched fallback proxy entity, a first initial address message to a gateway mobile switching center of the home network to which the user equipment belongs, so that the gateway mobile switching center sends a first send routing information request to a home location register of the home network to which the user equipment belongs.

2. The method according to claim 1, further comprising:
receiving, by the circuit switched fallback proxy entity, a first international mobile subscriber identification number of the user equipment, wherein the first international mobile subscriber identification number of the user equipment is sent by the home location register,
wherein the determining, by the circuit switched fallback proxy entity, whether the visited network to which the user equipment belongs and the home network to which the user equipment belongs are the same communication network comprises:
determining, by the circuit switched fallback proxy entity, whether the visited network to which the user equipment belongs and the home network to which the user equipment belongs are the same communication network according to the first international mobile subscriber identification number.

3. The method according to claim 2, wherein the receiving, by the circuit switched fallback proxy entity, the first international mobile subscriber identification number of the user equipment, wherein the first international mobile subscriber identification number of the user equipment is sent by the home location register, comprises:
receiving, by the circuit switched fallback proxy entity, the first international mobile subscriber identification number that is sent by the home location register through a cancel location request.

4. The method according to claim 3, wherein before the receiving, by the circuit switched fallback proxy entity, the first international mobile subscriber identification number that is sent by the home location register through the cancel location request, the method further comprises:
receiving, by the circuit switched fallback proxy entity, a first provide roaming number request sent by the home location register, wherein the first provide roaming number request carries a second international mobile subscriber identification number of the user equipment;
determining, by the circuit switched fallback proxy entity, whether the visited network to which the user equipment belongs and the home network to which the user equipment belongs are the same communication network according to the second international mobile subscriber identification number; and
if the visited network to which the user equipment belongs and the home network to which the user equipment belongs are not the same communication network, sending, by the circuit switched fallback proxy entity, a first provide roaming number response to the home location register, wherein the first provide roaming number response carries a first mobile service roaming number, so that the home location register sends the first mobile service roaming number to the gateway mobile switching center.

5. The method according to claim 4, wherein after the home location register sends the first mobile service roaming number to the gateway mobile switching center, the method further comprises:
receiving, by the circuit switched fallback proxy entity, a second initial address message that is sent by the gateway mobile switching center according to the first mobile service roaming number.

6. The method according to claim 4 or 5, further comprising:
allocating, by the circuit switched fallback proxy entity, the first mobile service roaming number.

7. The method according to any one of claims 1 to 6, wherein after the gateway mobile switching center sends the first send routing information request to the home location register, the method further comprises:
sending, by the home location register, a second provide roaming number request to a visited mobile switching center of the visited network to which the user equipment belongs;
receiving, by the home location register, a second provide roaming number response sent by the visited mobile switching center, wherein the second provide roaming number response carries a second mobile service roaming number; and
sending, by the home location register, a first send routing information ack to the gateway mobile switching center, wherein the first send routing information ack carries the second mobile service roaming number, so that the gateway mobile switching center sends a third initial address message to the visited mobile switching center according to the second mobile service roaming number.

8. A circuit switched fallback proxy entity apparatus, comprising:
a determining unit, configured to determine whether a visited network to which a user equipment belongs and a home network to which the user equipment belongs are a same communication network when a voice call is initiated to the user equipment; and
a sending unit, configured to send a first initial address message to a gateway mobile switching center of the home network to which the user equipment belongs when the determining unit determines that the visited network to which the user equipment belongs and the home network to which the user equipment belongs are not the same communication network, so that the gateway mobile switching center sends a first send routing information request to a home location register of the home network to which the user equipment belongs.

9. The apparatus according to claim 8, further comprising:
a receiving unit, configured to receive a first international mobile subscriber identification number of the user equipment, wherein the first international mobile subscriber identification number of the user equipment is sent by the home location register,
wherein the determining unit is specifically configured to determine, according to the first international mobile subscriber identification number received by the receiving unit, whether the visited network to which the user equipment belongs and the home network to which the user equipment belongs are the same communication network.

10. The apparatus according to claim 9, wherein the receiving unit is specifically configured to receive the first international mobile subscriber identification number that is sent by the home location register through a cancel location request.

11. The apparatus according to claim 10, wherein the receiving unit is further configured to receive a first provide roaming number request sent by the home location register, wherein the first provide roaming number request carries a second international mobile subscriber identification number of the user equipment;
the determining unit is specifically configured to determine, according to the second international mobile subscriber identification number received by the receiving unit, whether the visited network to which the user equipment belongs and the home network to which the user equipment belongs are the same communication network; and
when the determining unit determines, according to the second international mobile subscriber identification number, that the visited network to which the user equipment belongs and the home network to which the user equipment belongs are not the same communication network, the sending unit is further configured to send a first provide roaming number response to the home location register, wherein the first provide roaming number response carries a first mobile service roaming number, so that the home location register sends the first mobile service roaming number to the gateway mobile switching center.

12. The apparatus according to claim 11, wherein the receiving unit is further configured to receive a second initial address message that is sent by the gateway mobile switching center according to the first mobile service roaming number.

13. The apparatus according to claim 11 or 12, further comprising:
an allocating unit, configured to allocate the first mobile service roaming number.
